# EUROPÄISCHE PATENTSCHRIFT

(11) **EP 0 969 227 B1**
(45) Veröffentlichungstag und Bekanntmachung des Hinweises auf die Patenterteilung: **28.01.2004**
(21) Anmeldenummer: 99109082.0
(22) Anmeldetag: 07.05.1999
(51) Int. Cl.: F16H 7/18, F16H 7/08

(54) **Schiene für einen Kettentrieb, insbesondere Aggregateantrieb bei Brennkraftmaschinen**
Shoe for a chain drive, particularly for an auxiliary drive of combustion engines
Sabot pour une transmission à chaîne, en particulier pour l'entraînement d'aggrégats des machines à combustion interne

(30) Priorität: 01.07.1998 DE 19829439
(43) Veröffentlichungstag der Anmeldung: 05.01.2000
(73) Patentinhaber: Bayerische Motoren Werke Aktiengesellschaft, 80788 München (DE)
(72) Erfinder: Hametner, Thomas, 4400 Steyr (AT)

(56) Entgegenhaltungen:
- DE-A- 19 747 163
- US-A- 5 306 212
- PATENT ABSTRACTS OF JAPAN vol. 1995, no. 05, 30. Juni 1995 (1995-06-30) & JP 07 035207 A (NISSAN MOTOR CO LTD), 7. Februar 1995 (1995-02-07)

## Beschreibung

Die Erfindung bezieht sich auf eine Schiene für einen Kettentrieb gemäß den aus dem US-Patent 5,306,212 hergeleiteten Gattungsmerkmalen des unabhängigen Patentanspruches.

Bei dieser bekannten Schiene ist ein zwischen den Kettenrädern angeordneter Abschnitt über einen Klothoiden-Teilabschnitt als Übergangskurve mit einem Kreisbogen-Abschnitt der Schiene verbunden. Dieser Klothoiden-Teilabschnitt dient bei einem Kettentrieb mit einem Kettenrad von relativ geringer Zähnezahl einer verbesserten Einführung einer langgliedrigen Kette zur Reduzierung des bekannten Polygoneffektes.

Im übrigen ist es für Schienen entsprechend dem Kettenverlauf im Zugtrum und vor allem im Leertrum zur Vermeidung von Verschleiß und akustischer Störgeräuschen bekannt, die jeweilige Schiene bogenförmig zu gestalten (DE-A 197 47 163; US 4,692,129). Diese bogenförmige Gestaltung der Schiene kann zum einen durch Kombination von unterschiedlich gekrümmten Abschnitten mit einem jeweiligen, im wesentlichen stetigen Übergang erzielt sein oder der Gestaltung ist eine stetige Funktion zugrunde gelegt, wie z.B. die Funktionskurve einer Kettenlinie (DE-B1 105 248; DE-C 494 464).

Neben den vorgenannten Übergangsstellen unterschiedlich gekrümmter Bogenabschnitte ist auch im Anschluss an eine derartige Übergangsstelle der anschließende Krümmungsverlauf des Bogenabschnittes für die Qualität des Kettentriebes nicht unerheblich.

Der Erfindung liegt die Aufgabe zugrunde, für eine gattungsgemäße Schiene einen jeweils optimal angepassten Krümmungsverlauf für ein Zugtrum und/oder ein Leertrum als Teilabschnitt einer Klothoide aufzuzeigen, wobei femer durch Einsetzen eines Bemessungswertes des Kettentriebes in den analytischen Ausdruck ein dem jeweiligen Bedarf optimaler Krümmungsverlauf der Schiene erzielbar ist.

Diese Aufgabe ist mit dem Patentanspruch 1 gelöst. Der Vorteil der erfindungsgemäßen Klothoiden-Teilabschnitte ist, dass diese in den Koordinatenursprung tangential zur Abszisse einlaufen, wobei die vom Koordinatenursprung aus mit der Bogenlänge linear wachsende Krümmung einen an den Kettenverlauf optimal sich anpassenden Krümmungsverlauf ergibt. Mit dem tangentialen Einlauf in die Abszisse ist mit diesem Abschnitt für eine Schiene eine einwandfreie Übergangsstelle, beispielsweise zu einem geraden Abschnitt der Schiene gewährleistet, wobei im Anschluss an diese stetige Übergangsstelle im weiteren ein für den Verschleiß sowie für die Akustik günstiger Krümmungsverlauf sich anschließt.

Ein für die Schienengestaltung vorteilhafter Klothoiden-Verlauf über einen ersten Teilabschnitt vom Koordinatenursprung entlang der positiven Abszisse ist in weiterer Ausgestaltung der Erfindung mit dem Proportionalitätsfaktor "a" dadurch erreicht, daß dieses a = 0,02 - 0,04 · A_{L} (mm) mit A_{L} als Achsabstand der Kettenräder gewählt ist.

Weitere Ausgestaltungen der Erfindung sind in Unteransprüchen beschrieben.

Die Erfindung ist anhand von in der Zeichnung dargestellten Ausführungsbeispielen beschrieben. Es zeigt
- Figur 1: einen Kettentrieb in schematischer Darstellung an einer Frontseite einer nicht näher gezeigten Brennkraftmaschine,
- Figur 2: eine in einem Koordinatenkreuz vollständig dargestellte Klothoide mit eingezeichneter Kettentrieb-Schiene über einen ersten Klothoiden-Teilabschnitt,
- Figur 3: eine vollständige dargestellte Klothoide mit eingezeichneter Kettentrieb-Schiene, die durch Spiegelung eines weiteren Klothoiden-Teilabschnittes an der Ordinate gebildet ist,
- Figur 4: eine vollständige Klothoide mit eingezeichneter Kettentrieb-Schiene in einem vom Koordinatenursprung entfernten Klothoiden-Teilabschnitt, und
- Figur 5: eine Kettentrieb-Schiene mit geradem Verlauf, an den sich beidendig jeweils ein ursprungsnaher Klothoiden-Teilabschnitt anschließt zweier gespiegelter Klothoiden.

Eine lediglich andeutungsweise dargestellte Brennkraftmaschine 1 umfaßt für einen nicht näher gezeigten Aggregateantrieb einen Kettentrieb 2 mit Schienen 3 und 4. Die zwischen beabstandeten Kettenräder 5 und 6 dem Führen und/oder Spannen der Kette 7 dienenden Schienen 3 und 4 weisen zumindest abschnittsweise einen stetigen Krümmungsverlauf auf.

Zur aufgabengemäßen Erzielung eines hinsichtlich verringerten Verschleißes und reduzierter akustischer Störgeräusche dem jeweiligen Verlauf der Kette 7 optimal angepaßten Krümmungsverlaufes wird erfindungsgemäß vorgeschlagen, daß jede Schiene 3, 4 in ihrem stetigen Krümmungsverlauf nach einem ursprungsnahen Teilabschnitt einer Klothoide 8 im ersten oder dritten Quadranten gestaltet ist, deren Krümmungsradius sich zu r = a²/s berechnet, wobei der Proportionalitätsfaktor "a" in Abhängigkeit des Achsabstandes A_{L} der Kettenräder 5 und 6 gewählt ist und ferner "s" die der jeweiligen Krümmung proportionale Länge des Kurvenbogens auf dem Teilabschnitt ist.

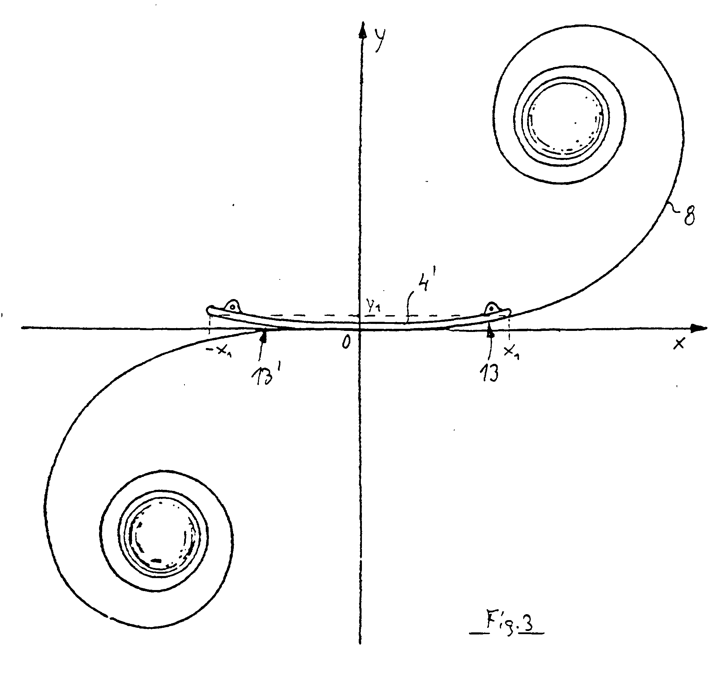

Gestalt und Größe der jeweiligen Klothoide 8 gemäß den Figuren 2 mit 5 bestimmt sich in vorteilhafter Weise mit dem Proportionalitätsfaktor "a" dadurch, daß dieser in Abhängigkeit des Achsabstandes der Kettenräder 5, 6 bestimmt ist zu: a = 0,02 - 0,04 - A_{L} (mm).

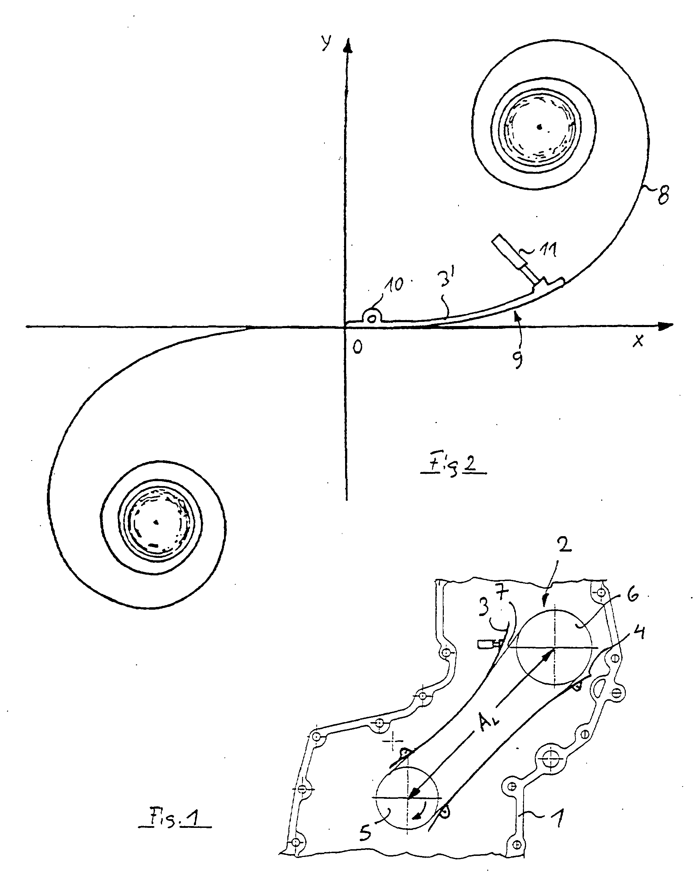

Eine gemäß Figur 1 leertrumseitig vorgesehene Schiene 3 ist gemäß Figur 2 als Schiene 3' in ihrer wesentlichen Länge gemäß einem im wesentlichen im Koordinatenursprung 0 beginnenden Teilabschnitt 9 der Klothoide 8 gestaltet, wobei einer im Anfangsbereich bzw. Koordinatenursprung des Klothoiden-Teilabschnittes 9 vorgesehenen Anlenkung 10 der Leertrum-Schiene 3' dieser im Endbereich des Klothoiden-Teilabschnittes 9 eine Spannvorrichtung 11 zugeordnet ist.

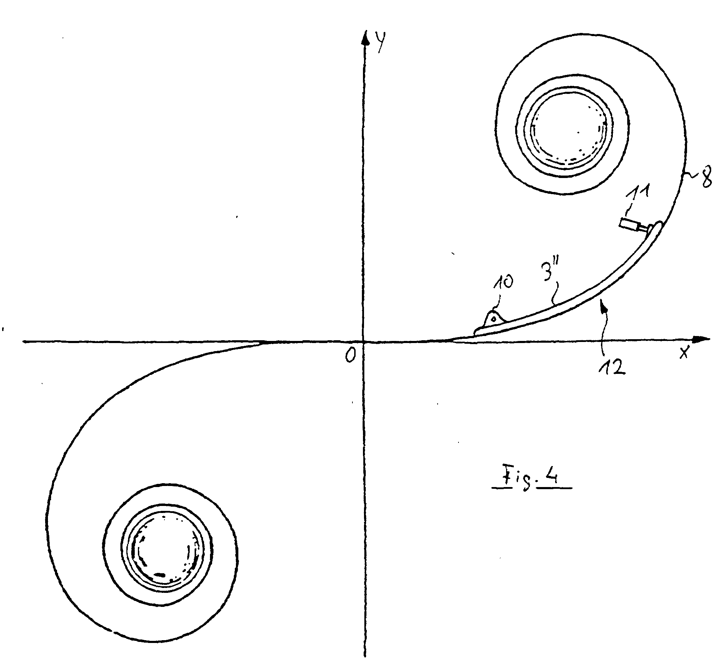

Eine weitere Leertrum-Schiene 3" ist in Figur 4 gezeigt, wobei der über die gesamte Länge der Leertrum-Schiene 3" stetige Krümmungsverlauf durch einen vom Koordinatenursprung 0 entfernt beginnenden Teilabschnitt 12 der Klothoide 8 gebildet ist.

Die in Figur 1 in dem Kettentrieb 2 zugtrumseitig dargestellte Führungsschiene 4 ist gemäß Figur 3 erfindungsgemäß als Schiene 4' derart gestaltet, daß diese in einer ersten Teillänge aus einem im Koordinatenursprung 0 beginnenden Teilabschnitt 13 der Klothoide des ersten Quadranten gebildet ist und daß die zweite Teillänge der zugtrumseitigen Schiene 4' im vierten Quadranten mittels des an der positiven Ordinate gespiegelten Klothoiden-Teilabschnittes 13 des ersten Quadranten gestaltet ist.

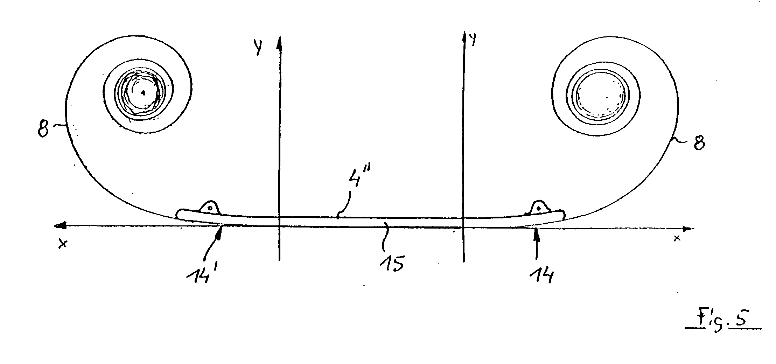

Schließlich zeigt Figur 5 eine zugtrumseitige Schiene 4" mit an beiden Enden vorgesehenen Klothoiden-Teilabschnitten 14 und 14', die über einen geraden Abschnitt 15 der Führungsschiene 4" verbunden sind.

## Patentansprüche

1. Schiene für einen Kettentrieb, insbesondere Aggregateantrieb bei Brennkraftmaschinen,
- wobei die zwischen beabstandeten Kettenrädern (5, 6) dem Führen und/oder Spannen der Kette (7) dienende jeweilige Schiene (3, 3', 3"; 4, 4', 4") abschnittsweise einen stetigen Krümmungsverlauf gemäß einer Klothoide (8) mit Krümmungsradius r = a²/s aufweist, wobei
- "der Proportionalitätsfaktor a" in Abhängigkeit eines Achsabstandes "A_{L}" der Kettenräder gewählt ist, wobei "s" die der jeweiligen Krümmung proportionale Länge des Kurvenbogens auf dem Teilabschnitt ist, **dadurch gekennzeichnet, dass**
- eine leertrumseitige Schiene (3, 3', 3") in ihrer wesentlichen Länge gemäß einem im Koordinatenursprung (0) oder davon entfernt in einem ersten Quadranten beginnenden Teilabschnitt (9, 12) der Klothoide (8) gestaltet ist, und
- dass eine zugtrumseitige Schiene bzw. Führungsschiene (4, 4', 4") in einer ersten Teillänge aus einem im Koordinatenursprung (0) beginnenden Klothoiden-Teilabschnitt (13) des ersten Quadranten und
- in einer zweiten Teillänge im vierten Quadranten mittels des an der positiven Ordinate gespiegelten Klothoiden-Teilabschnittes (13) des ersten Quadranten gebildet ist.

2. Schiene nach Anspruch 1,
**dadurch gekennzeichnet, dass** beide endseitigen Klothoiden-Teilabschnitte (14, 14') der zugtrumseitigen Führungsschiene (4") ein gerader Abschnitt (15) verbindet.

3. Schiene nach Anspruch 1,
**dadurch gekennzeichnet, dass** "a" in Abhängigkeit eines Achsabstandes "A_{L}" der Kettenräder (5, 6) gewählt ist zu: a = 0,02 - 0,04 × A_{L} (mm).

## Claims

1. A rail for a chain drive, especially a unit drive in an internal combustion engine,
- wherein portions of a rail (3, 3', 3"; 4, 4', 4") for guiding and/or tightening a chain (7) between spaced-apart chain wheels (5, 6) have a constant curvature in the form of a clothoid (8) having a radius of curvature r = a²/s wherein
- the proportionality factor a² is chosen in dependence on an axial spacing A_{L} between the chain wheels, wherein s is the length, proportional to the curvature, of the arc on the portion, **characterised in that**
- a substantial length of a rail (3, 3', 3") on the loose side has the shape of a portion (9, 12) of the clothoid (8) beginning at the co-ordinate origin (0) or at a distance therefrom in a first quadrant,
- a first partial length of a rail or guide rail (4, 4', 4'') on the tight side comprises a clothoid portion (13) of the first quadrant beginning at the co-ordinate origin (0) and
- a second partial length in the fourth quadrant is formed by the clothoid portion (13) in the first quadrant reflected in the positive ordinate.

2. A rail according to claim 1,
**characterised in that** the two clothoid portions (14, 14') at the ends of the guide rail (4'') on the tight side are connected by a straight portion (15).

3. A rail according to claim 1,
**characterised in that** a is chosen equal to 0.02 - 0.04 × A_{L} (mm) in dependence on the axial spacing A_{L} between the chain wheels (5, 6).

## Revendications

1. Rail pour une transmission par chaîne, en particulier entraînement d'agrégat pour des moteurs à combustion interne,
- dans lequel chaque rail (3, 3', 3", 4, 4', 4") servant, entre les roues dentées écartées (5, 6), à guider et/ou à détendre la chaîne 7 qui présente, sous forme de segment, un tracé de courbure permanent, selon une clothoïde (8) d'un rayon de courbure r = a²/s,
- dans lequel le « facteur de proportionnalité a » est alors exprimé en fonction d'une distance axiale « A_{L} » des roues dentées, dans lequel « s » correspond à la longueur proportionnelle à chaque courbure de l'arc de cercle de la courbe sur la section,
**caractérisé en ce qu'**
- un rail (3, 3', 3"), prévu du côté du brin de retour, est formé, dans sa longueur essentielle, selon une section (9, 12) de la clothoïde (8) commençant à l'origine des coordonnées (0) ou dans un premier quart de cercle éloigné de l'origine des coordonnées et
- un rail du côté du brin de traction ou un rail de guidage (4, 4', 4") est composé, dans une première longueur partielle, d'une section (13) de la clothoïde du premier quart de cercle commençant à l'origine des coordonnées (0) et,
- dans une deuxième longueur partielle du quatrième quart de cercle, un rail du côté du brin de traction ou un rail de guidage est composé de la section (13) de la clothoïde du premier quart de cercle réfléchie sur l'ordonnée positive.

2. Rail selon la revendication 1,
**caractérisé en ce que**
les deux sections extrêmes (14, 14') de la clothoïde du rail de guidage (4") du côté du brin de traction sont reliées à un segment droit (15).

3. Rail selon la revendication 1,
**caractérisé en ce que**
« a » est défini en fonction de la distance axiale « A_{L} » des roues dentées (5, 6), par a = 0,02 - 0,04 × A_{L} (mm).
